Europäisches Patentamt

**European Patent Office**

**Office européen des brevets**

(19)

(11) Numéro de publication: **0 187 403**
**A1**

(12)

# DEMANDE DE BREVET EUROPEEN

(21) Numéro de dépôt: **85201941.3**

(22) Date de dépôt: **22.11.85**

(51) Int. Cl.⁴: **A 21 C 9/08**

---

(30) Priorité: **18.12.84 BE 214181**

(43) Date de publication de la demande:
**16.07.86 Bulletin 86/29**

(84) Etats contractants désignés:
**AT CH DE FR GB IT LI LU NL SE**

(71) Demandeur: **"Bakkerij Stevens", naamloze vennootschap**
**Opstaldries 11B**
**B-9572 Lierde(BE)**

(72) Inventeur: **Stevens, Raf**
**Zavelputstraat 18**
**B-3020 Herent(BE)**

(74) Mandataire: **Pieraerts, Jacques et al,**
**Bureau Gevers S.A. rue de Livourne 7, Bte. 1**
**B-1050 Bruxelles(BE)**

---

(54) Procédé pour la production à l'échelle industrielle d'une pâtisserie qui requiert l'utilisation d'un moule.

(57) L'invention concerne un procédé pour la production à l'échelle industrielle et la mise dans le commerce d'une pâtisserie qui requiert l'utilisation d'un moule, caractérisé en ce que l'on pose dans des moules prévus dans ce but, une feuille d'aluminium, on étale et presse la pâte sur cette feuille et ledit moule, et on congèle les produits ainsi obtenus sous forme de pâte et on les conserve ou fournit dans cet état pour un traitement ultérieur, à savoir la cuisson.

EP 0 187 403 A1

La présente invention est relative à un procédé pour la production à l'échelle industrielle et la mise dans le commerce d'une pâtisserie qui requiert l'utilisation d'un moule.

Le procédé est en particulier, mais pas exclusivement, d'application pour la fabrication à l'échelle industrielle ou semi-industrielle de tartes et tartelettes qui sont principalement constituées par une croûte de pâte et une garniture.

Jusqu'à présent, ces tartes ont été produites en utilisant des moules métalliques. Les moules placés les uns à côté des autres sont alors recouverts d'une couche de pâte, couche de pâte qui est repoussée dans les moules concernés, après quoi les restes de pâte entre les moules sont enlevés à la main. La garniture des fonds de pâte peut alors avoir lieu et suivant les besoins, l'ensemble peut encore être recouvert d'une couche de pâte. Les tartes ou tartelettes garnies et couvertes sont alors prêtes à être cuites. Après la cuisson, les tartes sont retirées des moules, moules qui sont alors prêts pour une nouvelle utilisation.

L'invention a à présent pour objet d'éliminer les inconvénients du procédé dépeint ci-dessus et d'offrir un procédé qui, avec une production industrielle importante de telles pâtisseries, n'offre pas l'inconvénient de devoir disposer d'un grand nombre de moules.

A cette fin le procédé suivant l'invention est caractérisé par le fait qu'on pose dans des moules prévus dans ce but, une feuille d'aluminium, on étale et presse la pâte sur cette feuille d'aluminium et lesdits moules, et on surgèle les produits ainsi obtenus sous forme de pâte et on les conserve ou fournit dans cet état pour un traitement ultérieur, c'est-à-dire la cuisson.

Toujours suivant l'invention, on utilise une feuille d'aluminium qui ne présente aucun rebord périphérique de renforcement et dont les dimensions sont calculées de telle sorte que la feuille s'adapte avec précision dans un moule.

L'invention concerne aussi une pâtisserie, notamment une tarte, obtenue manifestement suivant le procédé correspondant à l'une des revendications 1 à 3.

D'autres détails et avantages de l'invention ressortiront de la description ci-après d'un procédé pour la production à une échelle industrielle et la mise dans le commerce d'une pâtisserie qui requiert l'utilisation d'un moule, suivant l'invention. Cette description est exclusivement donnée à titre d'exemple non limitatif.

L'invention s'applique à n'importe quel genre de pâtisserie qui est produit sous la forme d'une tarte ou tartelette. Comme déjà exposé dans l'introduction, la présente invention est destinée à une production industrielle ou semi-industrielle, donc une production qui peut atteindre certains jours des séries de 360 à 380 pour le petit format, et 200 ou plus pour le format dit grand. La signification de ces chiffres est cependant sans importance pour l'application du procédé suivant l'invention. En premier lieu, on propose un procédé avec lequel on évite l'immobilisation d'un très grand nombre de moules, tandis que la production, indépendamment de la demande qui peut varier fortement suivant les jours, n'est pas perturbée.

Le principe de base de l'invention réside dans la constatation que toute la production peut être conservée dans une installation de surgélation sans devoir utiliser les moules toujours encore nécessaires.

Pour y parvenir suivant l'invention, on place dans chaque moule, une feuille d'aluminium qui ne présente aucun rebord périphérique mais dont les dimensions sont choisies de telle sorte que la feuille s'adapte exactement dans le moule métallique. On y dépose alors la couche de pâte et on la presse dans le moule, après quoi la tarte est garnie de la manière habituelle et est éventuellement couverte avec une nouvelle couche de pâte. Sous cette forme les tartes sont surgelées. Ceci signifie qu'elles peuvent être retirées dans cet état de surgélation avec la feuille d'aluminium qui ne présente alors aucun rebord périphérique, à partir des moules métalliques. Les produits surgelés sont alors emmagasinés dans l'installation de surgélation précitée, tandis que les moules métalliques sont directement récupérés. La pâtisserie est ainsi, à l'état surgelé, soit fournie aux pâtissiers qui cuisent ensuite le produit, soit finie par le producteur lorsqu'il existe une demande ou un besoin à ce sujet.

Il est donc évident d'après le procédé décrit ci-avant qu'on épargne une importante réserve de plats métalliques, même lorsque la production de telles pâtisseries est accrue. L'importance ou la capacité de l'installation de surgélation doit évidemment être adaptée à la production, mais cette adaptation est justifiée économiquement.

Un autre avantage important du procédé suivant l'invention doit être considéré dans le fait que des produits cuits toujours frais peuvent être fournis, étant donné que les tartes dans l'installation de surgélation peuvent être considérées comme fraîches, tandis que la production et la fourniture en grandes quantités de tartes complètement terminées ou cuites ne satisfont pas toujours cette exigence.

Il doit être entendu que la présente invention n'est pas limitée à la forme de réalisation décrite ci-avant et que bien des modifications peuvent y être apportées sans sortir du cadre du présent brevet.

<u>REVENDICATIONS</u>

1. Procédé pour la production à l'échelle industrielle et la mise dans le commerce d'une pâtisserie qui requiert l'utilisation d'un moule, caractérisé en ce qu'on pose dans des moules prévus dans ce but, une feuille d'aluminium, on étale et presse la pâte sur cette feuille d'aluminium et ledit moule, et on surgèle le produit obtenu sous forme de pâte et on le conserve ou fournit dans cet état pour un traitement ultérieur, à savoir la cuisson.

2. Procédé suivant la revendication 1, caractérisé en ce que l'on utilise une feuille d'aluminium qui ne présente aucun rebord périphérique de renforcement, et on lui choisit des dimensions grâce auxquelles la feuille s'adapte exactement dans ledit moule.

3. Procédé suivant l'une ou l'autre des revendications 1 et 2, caractérisé en ce qu'on l'applique à des tartes garnies et finies avec une couche de pâte.

4. Feuille d'aluminium, caractérisée en ce qu'elle ne présente aucun rebord périphérique et est spécialement destinée à être utilisée conformément au procédé suivant l'une quelconque des revendications 1 à 3.

5. Pâtisserie, notamment tarte, manifestement produite conformément au procédé suivant l'une quelconque des revendications 1 à 3.

Office européen
des brevets

**RAPPORT DE RECHERCHE EUROPEENNE**

## DOCUMENTS CONSIDERES COMME PERTINENTS

| Catégorie | Citation du document avec indication en cas de besoin des parties pertinentes | Revendication concernee | CLASSEMENT DE LA DEMANDE (Int. Cl 4) |
|---|---|---|---|
| | | | A 21 C 9/08 |
| Y | GB-A- 868 813 (ATLAS EQUIPMENT (LONDON) LTD.) * Page 2, lignes 25-40; figure 14 * | 1,3 | |
| Y | FR-A-2 260 300 (MAISON D. BOIRON) * En entier * | 1,3 | |
| A | GB-A- 305 297 (T. CORNS) | | |
| | FR-A-2 377 940 (HD-EKCO N.V.) | | |

DOMAINES TECHNIQUES
RECHERCHES (Int Cl 4)

A 21 C
A 21 D
A 23 P
B 65 B

Le present rapport de recherche a ete établi pour toutes les revendications

| Lieu de la recherche | Date d achèvement de la recherche | Examinateur |
|---|---|---|
| LA HAYE | 17-04-1986 | FRANKS N.M. |